# EUROPEAN PATENT APPLICATION

(11) **EP 4 050 823 A1**
(43) Date of publication of application: **31.08.2022**
(21) Application number: 21159496.5
(22) Date of filing: 26.02.2021
(51) Int. Cl.: H04J 3/06, H04L 7/00, H04L 12/40

(54) **A METHOD FOR SYNCHRONIZING TIME**

(71) Applicant: VOLVO TRUCK CORPORATION, 405 08 Göteborg (SE)
(72) Inventor: YHR, Hamid, 443 42 Gråbo (SE); SVENSSON, Anders, 412 55 Göteborg (SE)
(74) Representative: Valea AB

(57) **Abstract**

The invention relates to a method for synchronizing time in an assembly of embedded electronic systems (ES), wherein the embedded systems (ES1) are arranged to communicate with each other via a communication system (B, DS), wherein the embedded systems comprise respective clocks. The method comprises
- one of the embedded systems, assigned as a dictating system (ES1), sending an alert message (AM) to the one or more remaining embedded systems (ES2-ES3), the alert message being representative of information that the dictating system (ES1) will send a synchronization signal (SYN) to the one or more remaining embedded systems (ES2-ES3) at a point in time indicated in the alert message,
- the dictating system (ES1) sending said synchronization signal (SYN) at said indicated point in time, and
- the one or more remaining systems (ES2-ES3) synchronizing the respective clocks of the one or more remaining systems with the clock of the dictating system (ES1) based on said synchronization signal.

## Description

### TECHNICAL FIELD

The invention relates to a method for synchronizing time in an assembly of embedded electronic systems. The invention also relates to a computer program, a computer readable medium, an assembly of embedded electronic systems, and a vehicle.

The invention can be applied to heavy-duty vehicles, such as trucks and buses. Although the invention will be described with respect to trucks, the invention is not restricted to this particular type of vehicle, but may also be used in other vehicle types such as delivery vans and cars.

### BACKGROUND

In a modern vehicle, a plurality of embedded electronic systems control respective functions, or devices. An embedded system may be a small computer that forms part of a larger system, device or machine. The embedded systems may have respective clocks, which are used in the processes of the systems. These clocks may be real time clocks (RTC). However, the times given by these clocks may differ after some amount of time due to clock drift, caused by clocks counting time at slightly different rates. The clocks of the system indicating different times may create problems, e.g. due to the fact that the systems communicate with each other, with time stamped pieces of data.

In a vehicle, time synchronisation between embedded systems is essential. For example, logging of data from sensors connected to respective embedded systems must result in events being reflected in a coherent manner.

Many time synchronization methods are known. As an example, US2011135047A1 describes a time synchronization among devices of an industrial process control system, during a temporary absence of a system reference time. A device predicts the offset or drift between its local clock and the unavailable system reference time based on a recorded offset history. As a transient clock master, the device then distributes an approximated or transient system reference time, based on the device's local clock corrected for the predicted offset, to other devices of the system.

As further examples, there are solutions to achieve time synchronization, e.g. through Ethernet, the PCIe (Peripheral Component Interconnect express) interface standard, or GPS (Global Positioning System). However, due to cost sensitivity, it may not be feasible for embedded systems in vehicles to utilize known solutions.

There is therefore a desire, in particular for vehicles, to obtain a time synchronisation process which is simple, and therefore cheap, to implement.

### SUMMARY

It is an object of the invention to provide, in particular for a vehicle, time synchronization for embedded systems which is simple to implement.

The object is reached with a method according to claim 1. Thus, the object is reached with a method for synchronizing time in an assembly of embedded electronic systems, wherein the embedded systems are arranged to communicate with each other via a communication system, wherein the embedded systems comprise respective clocks, wherein
- one of the embedded systems, assigned as a dictating system, sending an alert message to the one or more remaining embedded systems, the alert message being representative of information that the dictating system will send a synchronization signal to the one or more remaining embedded systems at a point in time indicated in the alert message,
- the dictating system sending said synchronization signal at said indicated point in time, and
- the one or more remaining systems synchronizing the respective clocks of the one or more remaining systems with the clock of the dictating system based on said synchronization signal.

The method may comprise assigning one of the systems as a dictating system. The dictating system may be arranged to communicate with one or more remaining systems. The dictating system may be regarded as a master system, and the remaining systems may be regarded as slave systems. The clock of the dictating system may be regarded as a master clock, and the clocks of the remaining systems may be regarded as slave clocks. The alert message may be sent as a single message, or it may be divided into different time separated parts. The synchronization signal may be a digital signal, or an analogue signal.

The invention provides a time synchronization process that requires only a few simple software implementations measures. Therefore, embodiments of the invention are simple to implement. Thereby, a cost efficient way to achieve time synchronization between embedded systems, e.g. of a vehicle, is provided.

In some embodiments, based on the point in time indicated in the alert message AM, the respective remaining one or more embedded systems adjusts its respective clock upon receiving the synchronization signal, to the time indicated in the alert message. The respective remaining one or more embedded systems may adjust its respective clock when receiving the synchronization signal. In such embodiments, the respective remaining one or more embedded systems may, in dependence on receiving the synchronization signal, merely adjust its respective clock. Thereby, a particularly simple implementation is provided.

In alternative embodiments, the respective remaining system may, when receiving the synchronization signal, note the time according to its own clock. This note of the time according to the clock of the receiving system, when the signal was received, may be temporarily stored by the receiving system. Thereafter, a time deviation of the receiving system clock from the dictating system clock may be determined based on said stored note of time, and the time indicated in the alert message. Thereupon, the clock of the receiving system can be adjusted based on the determined time deviation.

Preferably, the dictating system sends the synchronization signal at said indicated point in time according to the clock of the dictating system. Thereby, it is ensured that the system clocks are synchronized in accordance with the dictating system clock.

Preferably, the synchronization signal is a voltage pulse, or a current pulse. Thereby, the synchronization signal can be carried by a current level or a voltage level. Thereby, a particularly simple implementation may be provided for the synchronization signal. In some embodiments, the synchronization signal may be adapted to reduce the influence of disturbances. For example, the synchronization signal may be transmitted according to the LVDS (Low-Voltage Differential Signaling) standard, also known as TIA/EIA-644.

Preferably, the communication system comprises one or more communication buses, wherein the alert message is sent through at least one of the one or more communication buses. The communication system may comprise a synchronization signal transmission line, wherein the synchronization signal is sent through the signal transmission line. Thereby, the signal transmission line may be separate from the one or more communication buses. Thereby, the synchronization signal may be sent in a simple manner, independently of any protocol used for the bus, or buses, for example independently of any sending or reception processes of such a protocol. The communication bus(es) can be provided in any suitable manner, e.g. according to the so-called I2C serial communication protocol, with the so-called Serial Peripheral Interface (SPI), and/or according to the so-called Controller Area Network (CAN) bus standard. The separation of the synchronization signal transmission line from the bus(es), ensures a quick transmission of the synchronization signal. Thereby, the time interval from the time of the dictating system sending synchronization signal to the remaining systems receiving the synchronization signal, may be negligeable. This ensures the accuracy of the time synchronization process of embodiments of the invention.

More specifically, the signal line may be embodied as an optical fiber or an electric conduit. Thereby, the synchronization signal may travel at a speed close to the speed of light, and the delay caused by its transmission will be negligible. By separating the means of transferring the synchronization signal from the bus used for the transfer of the alert message from, the synchronisation signal may not be subjected to any delay caused by the characteristics of the bus itself. For the transfer of the synchronization signal, it does not matter whether the bus is slow or fast.

Also, where different buses are used to connect systems of the assembly, there may be different delays of receptions of the alert message by separate receiving systems, caused by different characteristics of the buses. However, since the synchronization signal is transferred separately from the buses, the differences of the transmission times through the buses will not affect the synchronization signal transmission.

In some embodiments, the method comprises one or more of the one or more remaining embedded systems receiving the synchronization signal via two or more synchronization signal transmission lines. Thereby, a redundancy may be provided for the synchronization signal transmission.

In some embodiments, the method comprises determining a delay, from a receipt of the synchronization signal by one or more of the one or more remaining embedded systems to an adjustment of the clock of the respective remaining embedded system based on the synchronization signal, and adjusting the clock of the respective remaining embedded system partly based on said determined delay. Such a delay may be caused by the time of the receiving system to process the signal receipt and the clock adjustment. The delay may be pre-determined, e.g. based on information on the receiving system processor capacity, operating system, and/or clock.

In some embodiments, the method comprises at least one of the remaining embedded systems sending a confirmation message to the dictating system, upon receipt of said alert message. Thereby, it can be ensured that all remaining embedded systems receive the alert message. For example, the alert message may be sent repetitively until all remaining embedded systems have confirmed receipt. Thereby, a particularly accurate time synchronization process may be provided. The confirmation may be requested by the dictating system, e.g. in the alert message, or in a separate message.

Preferably, the method comprises synchronizing the clock of the dictating system with a time given by a source externally of the assembly of embedded systems. Thereby, it may be ensured that the assembly of embedded systems is synchronized with a clock of the external source. This is advantageous, e.g. where one or more of the embedded systems communicate data with an external system, e.g. a system in another vehicle, or an external stationary system. The external source may be any suitable source, e.g. the Global Positioning system (GPS) or the Global Navigation Satellite System (GNSS). The clock of the dictating system may be a real time clock (RTC).

Preferably, the method comprises, after the step of synchronizing the respective clocks of the one or more remaining embedded systems, assigning one of the remaining embedded systems as a dictating system. Thereby, the method may comprise repeating the steps of sending an alert message, sending a synchronization signal, and synchronizing the respective clocks of the one or more remaining embedded systems, with the newly assigned embedded system as the dictating system. Thus, in some embodiments, the role of being a dictating system may be moved from one embedded system to another. This may be done, e.g. in a case of a malfunction of the embedded system being assigned as the dictating system. Another system may thereby be assigned as the dictating system and replace the malfunctioning system as a dictating system. Thereby, a redundancy is provided. Thereby, the time synchronization process may be secured in the event of a failure of the dictating system.

Preferably, the steps of the method are carried out in a vehicle. Thereby, the benefit of the simple implementation of the method is taken advantage of in an environment, where such simplicity is desired, e.g. due to cost reasons.

The object is also reached with a computer program according to claim 13, a computer readable medium according to claim 14, an assembly of embedded electronic systems, according to claim 15, or a vehicle according to claim 16.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a sideview of a vehicle in the form of a truck with a semitrailer.
Fig. 2 is a block diagram depicting an assembly of embedded electronic systems in the vehicle in fig. 1.
Fig. 3 is a flow diagram depicting steps in a method in the assembly in fig. 2, according to an embodiment of the invention.
Fig. 4 is a diagram depicting the voltage in a signal transmission line of the assembly in fig. 2 as a function of time.
Fig. 5 is a block diagram depicting an assembly of embedded electronic systems, according to an alternative embodiment of the invention.

### DETAILED DESCRIPTION OF EXAMPLE EMBODIMENTS OF THE INVENTION

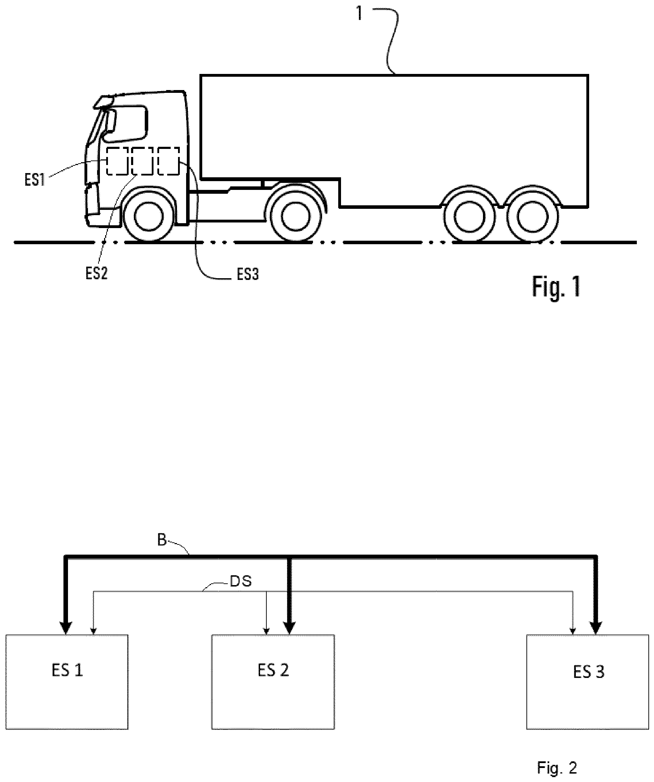

Fig. 1 shows a vehicle 1. In this example, the vehicle 1 is a truck with a semitrailer. However, the invention is equally applicable to other types of vehicles, such as cars, buses, dump trucks, and mining vehicles.

The vehicle includes a powertrain. The powertrain includes a propulsion arrangement. Embodiments of the invention are applicable to a variety of propulsion arrangements. The propulsion arrangement may include an internal combustion engine. The vehicle may be arranged to be driven by an engine only. The propulsion arrangement may include an electric motor. The propulsion arrangement may be a hybrid arrangement with an engine and a motor.

The vehicle comprises a plurality of electronic control units ES 1-ES3, herein also referred to as embedded systems. The embedded systems are arrange to control functions of the vehicle, such as its propulsion, and braking. The embedded systems may be arranged to control a respective of vehicle systems, such as an engine, a transmission, and a braking system. One of the systems may be a vehicle master control unit. The embedded systems may be provided as a single physical unit, e.g. a server. Thereby, the systems may be provided in respective racks of the server. In some embodiments, the systems may be provided as a plurality of physical units distributed in separate locations of the vehicle. The systems are arranged to communicate with each other as exemplfied below.

The vehicle may also comprise equipment for wireless communication not shown. One ormore of the embedded systems may be arranged to receive and/or send data via the vehicle communication equipment.

Reference is made also to fig. 2. The embedded systems ES 1-ES3 form what is herein referred to as an assembly of embedded systems. Each embedded system ES 1-ES3 may be provided in the form of a computer, or a processing device. Each embedded system ES1-ES3 may comprise a processing module, which may be embodied in the form of one or more hardware modules and/or one or more software modules. Each embedded system ES1-ES3 may further comprise a memory. The memory may store instructions, e.g. in the form of a computer program which may comprise computer readable code units. Embodiments of the invention provide a carrier, or program carrier, which provides said computer program. The carrier may be one of an electronic signal, an optical signal, a radio signal and a computer readable medium. Each embedded system ES 1-ES3 may further comprise an Input/Output module, which may be exemplified by a receiving module and/or a sending module. The receiving module may receive commands and/or information from various entities, and the sending module may send commands and/or information to various entities. Such entities may be other embedded systems, sensors, or other devices.

The embedded systems ES1-ES3 are arranged to communicate with each other via a communication system B, DS. The communication system comprises a communication bus B. The communication bus B can be provided e.g. according to the so-called I2C serial communication protocol, with the so-called Serial Peripheral Interface (SPI), and/or according to the so-called Controller Area Network (CAN) bus standard.

The communication system further comprises a synchronization signal transmission line DS. The signal transmission line DS is separate from the communication bus B. The signal transmission line may be embodied as one or more electric conduits arranged to carry signals, e.g. digital signals. The signals may be carried by control of a voltage or current in the one or more electric conduits. Alternatively, the signal transmission line may be embodied as one or more fibers for fiber optics. Thereby, the signals may be carried as light signals in the one or more fibers.

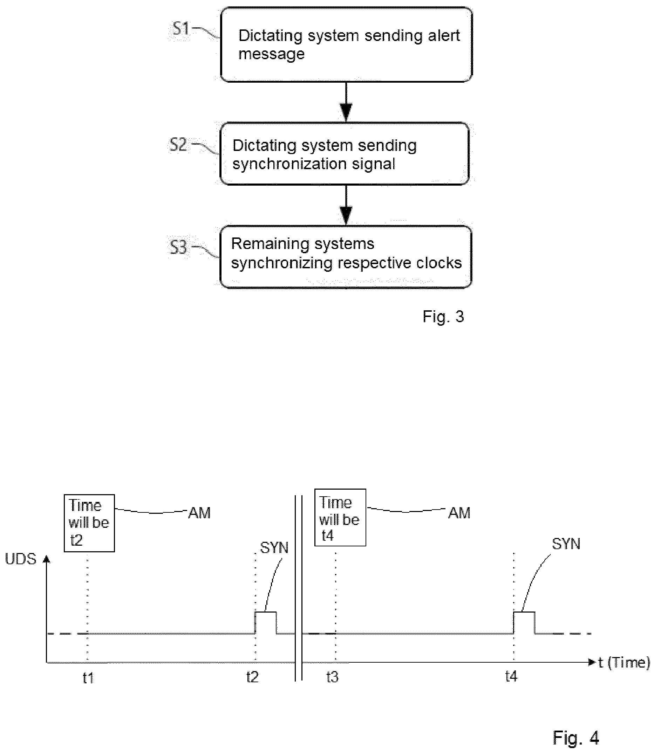

With reference to fig. 3, a method according to an embodiment of the invention will be described.

The embedded systems comprise respective clocks. The clocks are involved in controlling processes in the respective embedded systems. Also, the clocks are used in communication between the embedded systems. The clock of a system may be more or less accurate than a clock of another system. The method provides a way to synchronize the clocks of the embedded systems.

One of the embedded systems is assigned as a dictating system ES1. The dictating system dictates a time synchronization process of the method. The dictating system may be chosen due to having the most accurate clock of all systems in the system assembly. The dictating system may be a vehicle master control unit.

The clock of the dictating system is synchronized with a time given by a source externally of the assembly of embedded systems. However, in some embodiments, the clock of the dictating system may operate independently of any other time keeping device.

The clock of the dictating system may be a real time clock (RTC). The method comprises synchronizing the clock of the dictating system with a time given by a source externally of the assembly of embedded systems. Such a source could be the Global Positioning system (GPS) or the Global Navigation Satellite System (GNSS).

Reference is made also to fig. 4. The method comprises the dictating system ES1 sending S1 an alert message AM to the remaining embedded systems ES2-ES3. The alert message is representative of information that the dictating system ES1 will send a synchronization signal SYN to the remaining embedded systems ES2-ES3 at a point in time indicated in the alert message. The alert message AM is sent through the communication bus B.

In the example in fig. 4, the indicated timeline is in accordance with the clock of the dictating system. An alert message is sent at a point in time t1. The alert message indicates that a synchronization signal SYN will be sent at a future point in time t2. The time interval from sending the alert message to sending the synchronization signal may be of any suitable value, e.g. 0.1-1.0 seconds.

In some embodiments, the remaining embedded systems send a respective confirmation message to the dictating system, upon receipt of said alert message AM

At said indicated point in time t2 the dictating system ES1 sends S2 said synchronization signal SYN. The dictating system sends the synchronization signal SYN at said indicated point in time according to the clock of the dictating system. The synchronization signal SYN is sent through the signal transmission line DS. In this embodiment, the synchronization signal SYN is provided in the form of a pulse in a voltage level UDS in the signal transmission line DS. Where the signal has an extension in time, preferably the time of the initial end of the signal is used for adjusting the clock of the receiving system. I.e. the clock adjustment may be edge triggered.

Based on the received synchronization signal, the remaining systems ES2-ES3 synchronize S3 their respective clocks with the clock of the dictating system ES1. For example, based on the point in time indicated in the alert message AM, the respective remaining system may adjust its clock upon receiving the synchronization signal, to the time indicated in the alert message. Thereby, as suggested below, a delay, from a receipt of the synchronization signal to the adjustment of the clock of the receiving embedded system, may be taken into consideration.

In alternative embodiments, the respective remaining system may, when receiving the synchronization signal, note the time according to its own clock. This note of the time according to the clock of the receiving system, when the signal was received, may be temporarily stored by the receiving system. Thereafter, a time deviation of the receiving system clock from the dictating system clock may be determined based on said stored note of time, and the time indicated in the alert message. For example, the point in time indicated in the alert message is in the example in fig. 4 t2. According to the clock of one of the remaining systems ES2-ES3, the synchronization signal SYN is received at a point in time t2+Δt, where the time deviation Δt can be positive or negative. Thereby, based on the point in time indicated in the alert message, and the point in time, according to the clock of the receiving embedded system, of the receipt of the synchronization signal SYN, the receiving embedded system can determine the time deviation Δt between the clock of the receiving embedded system, and the clock of the dictating system. Thereupon, the clock of the receiving system can be adjusted based on the determined time deviation.

In some embodiments, a delay, from a receipt of a synchronization signal to an adjustment of the clock of the receiving embedded system, is determined. This may be advantageous where the receiving system adjusts its clock upon receiving the synchronization signal, as exemplified above. Thereby, the clock of the receiving embedded system is adjusted partly based on said determined delay. Said delay may be caused by the time of the receiving system to process the signal receipt and the clock adjustment. The delay may the pre-determined, e.g. based on information on the receiving system processor, operating system, and/or clock.

In the example in fig. 4, the time synchronization process is repeated at regular time intervals, e.g. once very minute or once an hour. The frequency of the process repetitions may depend on the quality of the clocks of each ES, and/or any requirements on clock deviation between the embedded systems. Thus, a further alert message is sent at a point in time t3 from the dictating system, to the remaining systems. The further alert message indicates that a further synchronization signal SYN will be sent at a future point in time t4. At said indicated point in time t4 the dictating system ES1 sends said synchronization signal SYN. Based on the received synchronization signal, the remaining systems ES2-ES3 synchronize S3 their respective clocks with the clock of the dictating system ES1.

Alternative features, and/or features in addition to the ones of the method described with reference to fig. 1 - fig. 4, are possible. For example, the remaining embedded systems may receive the synchronization signal via two or more synchronization signal transmission lines DS. Thereby, a redundancy may be provided in the synchronization signal transmission.

In some embodiments, the dictating system assignment may be changed from one embedded system to another. Thereby, after the step of synchronizing the respective clocks of the remaining embedded systems, one of the remaining embedded systems ES1 may be assigned as a dictating system. Thereafter, the steps of sending an alert message, sending a synchronization signal, and synchronizing the respective clocks of the remaining embedded systems, may be repeated with the newly assigned embedded system as the dictating system. It is understood that the group of remaining embedded systems is different before and after the change of the dictating system assignment.

Such a re-assignment of the dictating system may be done upon a failure of the embedded system initially being assigned as a dictating system. Preferably, the newly assigned system has the second most accurate clock in the system.

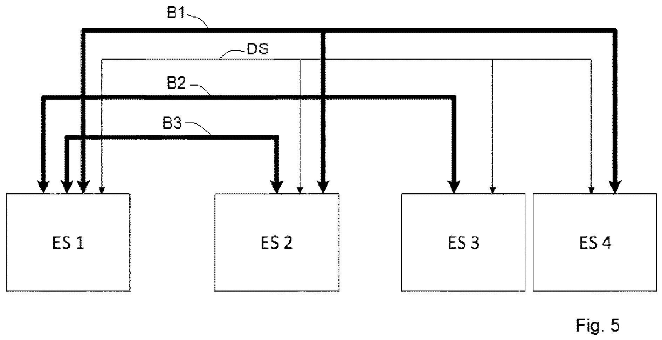

Reference is made to fig. 5, showing a, assembly of embedded systems ES1-ES4, where different buses B1, B2, B3 are used to connect the systems of the assembly. Thereby, there may be different delays of receptions of the alert message AM by separate receiving systems, caused by different characteristics of the buses B1, B2, B3. However, since the synchronization signal is transferred in the signal line DS, separately from the buses, the differences of the transmission times through the buses will not affect the synchronization signal transmission.

It is to be understood that the present invention is not limited to the embodiments described above and illustrated in the drawings; rather, the skilled person will recognize that many changes and modifications may be made within the scope of the appended claims.

## Claims

1. A method for synchronizing time in an assembly of embedded electronic systems (ES), wherein the embedded systems (ES1) are arranged to communicate with each other via a communication system (B, DS), wherein the embedded systems comprise respective clocks, **characterized by**
- one of the embedded systems, assigned as a dictating system (ES1), sending an alert message (AM) to the one or more remaining embedded systems (ES2-ES3), the alert message being representative of information that the dictating system (ES1) will send a synchronization signal (SYN) to the one or more remaining embedded systems (ES2-ES3) at a point in time indicated in the alert message,
- the dictating system (ES1) sending said synchronization signal (SYN) at said indicated point in time, and
- the one or more remaining systems (ES2-ES3) synchronizing the respective clocks of the one or more remaining systems with the clock of the dictating system (ES1) based on said synchronization signal.

2. A method according to claim 1, **characterized in that** the dictating system sends the synchronization signal (SYN) at said indicated point in time according to the clock of the dictating system.

3. A method according to any one of the preceding claims, **characterized in that** the synchronization signal (SYN) is a voltage pulse, or a current pulse.

4. A method according to any one of the preceding claims, **characterized in that** the communication system comprises one or more communication buses (B, B 1-B3), wherein the alert message (AM) is sent through at least one of the one or more communication buses (B, B 1-B3).

5. A method according to any one of the preceding claims, **characterized in that** the communication system comprises a synchronization signal transmission line (DS), wherein the synchronization signal (SYN) is sent through the signal transmission line (DS).

6. A method according to claims 4 and 5, **characterized in that** the signal transmission line (DS) is separate from the one or more communication buses (B, B1-B3).

7. A method according to any one of the preceding claims, **characterized by** one or more of the one or more remaining embedded systems receiving the synchronization signal via two or more synchronization signal transmission lines (DS).

8. A method according to any one of the preceding claims, **characterized by** determining a delay, from a receipt of the synchronization signal (SYN) by one or more of the one or more remaining embedded systems (ES2-ES3) to an adjustment of the clock of the respective remaining embedded system based on the synchronization signal, and adjusting the clock of the respective remaining embedded system partly based on said determined delay.

9. A method according to any one of the preceding claims, **characterized by** at least one of the remaining embedded systems sending a confirmation message to the dictating system, upon receipt of said alert message (AM).

10. A method according to any one of the preceding claims, **characterized by** synchronizing the clock of the dictating system with a time given by a source externally of the assembly of embedded systems.

11. A method according to any one of the preceding claims, **characterized by**, after the step of synchronizing the respective clocks of the one or more remaining embedded systems, assigning one of the remaining embedded systems (ES1) as a dictating system, and repeating the steps of sending an alert message (AM), sending a synchronization signal (SYN), and synchronizing the respective clocks of the one or more remaining embedded systems, with the newly assigned embedded system as the dictating system.

12. A method according to any one of the preceding claims, **characterized by** carrying out the steps of the method in a vehicle.

13. A computer program comprising program code means for performing the steps of any one of claims 1-12 when said program is run on a computer, or a group of computers, of the assembly of embedded electronic systems.

14. A computer readable medium carrying a computer program comprising program code means for performing the steps of any one of claims 1-12 when said program product is run on a computer, or a group of computers, of the assembly of embedded electronic systems.

15. An assembly of embedded electronic systems (ES) configured to perform the steps of the method according to any one of claims 1-12.

16. A vehicle comprising an assembly according to claim 15.
